# EUROPEAN PATENT APPLICATION

(11) **EP 1 252 849 A1**
(43) Date of publication of application: **30.10.2002**
(21) Application number: 02009049.4
(22) Date of filing: 23.04.2002
(51) Int. Cl.: A47J 47/00

(54) **Reversible cutting board and colander combination**

(30) Priority: 27.04.2001 US 845015
(71) Applicant: Dart Industries Inc., Orlando, Florida 32837 (US)
(72) Inventor: Cautereels, Victor J.J., 2520 Ranst (BE); Wallays, Nele, 2018 Antwerp (BE)
(74) Representative: Howden, Christopher Andrew

(57) **Abstract**

A cutting board having front and rear edge extending in opposite edges. Lateral walls extend from the rear wall, and may taper toward the front edge. This arrangement permits an angled cutting face with a reservoir for food juices, or by inverting, an angled cutting surface without reservoir. Further, in this inverted position, moving the front wall over the counter top edge will provide a horizontal cutting surface. A colander having a scoop form is also provided, and may be releasably secured to one or both lateral walls.

## Description

WE, Victor J.J. Cautereels and Nelle Wallays have invented certain improvements in a reversible cutting board and colander combination as described herein.

### CROSS-REFERENCE TO RELATED APPLICATIONS

Not applicable.

### STATEMENT REGARDING FEDERALLY SPONSORED RESEARCH

Not Applicable.

### BACKGROUND OF THE INVENTION

The present invention relates in general to cutting boards for preparing food, and in particular to an improved reversible cutting board which may be used with an associated colander

Reversible cutting boards, in which both sides of the board may be used, have been known in the art for some time. It has also been known from US D377,186 to form a cutting board surface at an angle to drain juices from the food away from the cutting area. Further, it has been known from US D259,166 to provide a cutting board with an aperture to mount a strainer/colander.

### SUMMARY OF THE INVENTION

It is an object of the present invention to provide a cutting board which permits selctive draining of food juices, and selective collection of such juices.

It is another object of the present invention to provide such a cutting board which is reversible.

It is a further object of the present invention to provide such a cutting board with an associated colander.

These and other objects are achieved by a cutting board having front and rear edge extending in opposite edges. Lateral walls extend from the rear wall, and may taper toward the front edge. This arrangement permits an angled cutting face with a reservoir for food juices, or by inverting, an angled cutting surface without reservoir. Further, in this inverted position, moving the front wall over the counter top edge will provide a horizontal cutting surface. A colander having a scoop form is also provided, and may be releasably secured to one or both lateral walls.

### BRIEF DESCRIPTION OF THE DRAWINGS

The objects and features of the invention noted above are explained in more detail with reference to the drawings, in which like reference numerals denote like elements, and in which:

Fig. 1 is a perspective view of a first side of a cutting board according to the to the present invention;

Fig. 2 is a perspective view of a second side of the cutting board;

Fig. 3 is a cross-sectional view along line 3-3 of Fig. 2;

Fig. 4 is a cross-sectional view along line 4-4 of Fig. 2;

Fig. 5 is a perspective view of a colander according to the present invention;

Fig. 6 is a cross-sectional view along line 6-6 of Fig. 5;

Fig. 7 is a detail view along line 7-7 of Fig. 5;

Fig. 8 is a detail top view of the first side of the cutting board of Fig. 1;

Fig. 9 is a cross-sectional view along line 9-9 of Fig. 8; and

Fig. 10 is a detail top view of the first side of the cutting board with the colander in the mounted position.

### DETAILED DESCRIPTION OF THE INVENTION

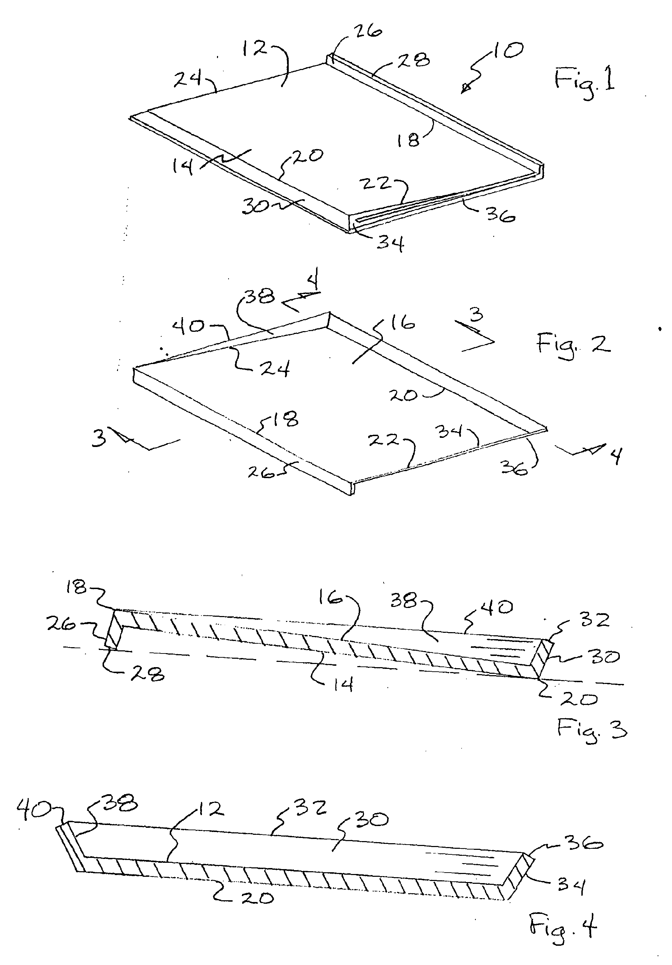

With reference to Fig. 1, a cutting board according to the present invention is generally designated by reference numeral 10. The cutting board 10 includes a substantially planar main panel 12 having a first cutting face 14 (Fig. 1) and a second cutting face 16 (Fig. 2). The main panel 12 includes a substantially square or rectangular periphery formed by a front edge 18, a substantially parallel, spaced rear edge 20, a first lateral edge 22, and a second lateral edge 24.

To simplify explanation of subsequent structure, a first direction will be defined as normal to the first cutting face 14 (i.e., upward in Fig. 1), and a second direction will be defined as normal to the second cutting face 16 (i.e., downward in Fig. 1). With this definition determined, Fig. 3 makes clear that a front wall 26 extends from the front edge 18 generally in the second direction to a front wall rim 28. Further, a rear wall 30 extends from the rear edge 20 generally in the first direction to a rear wall rim 32.

As such, the front and rear walls extend in generally opposite directions.

In a manner similar to the rear wall 30, a first lateral wall 34 extends from the first lateral edge 22 generally in the first direction to a first lateral wall rim 36, and a second lateral wall 38 extends from the second lateral edge 24 generally in the first direction to a second lateral wall rim 40. As shown, the rear wall 30 and first and second lateral walls 34 and 38, respectively, meet in the vicinity of the second cutting face 16 to together (with main panel 12) define a reservoir. It is preferred, but not required, that the rear wall rim 32 and first and second lateral wall rims 36 and 40 define a continuous edge. Similarly, it is preferred that the first and second lateral walls 34 and 38 taper downward from the rear wall 30 to the front edge 18.

This preference relates to the drainage features of the cutting board 10.

Specifically, review of Fig. 3 (where the dashed line indicates a supporting surface) shows that supporting the cutting board 10 on the front wall rim 28 and rear edge 20 causes the main panel 12 to be angled downward toward the rear edge 20, and the reservoir formed by the rear wall 30 and lateral walls 34 and 38. As such, juices from the food being cut upon second cutting face 16 will drain to this reservoir and be retained therein. As may be envisioned, inverting the cutting board 10 to be supported on the front wall rim 28 and rear wall rim 32 (and in the embodiment shown, the lateral wall rims 36 and 40) will similarly cause the main panel 12 to be angled downward toward the front edge 18. As such, juices from the food will drain to the front edge 18. If the lateral walls 34 and 38 were formed as a constant height (not shown), the front edge 18 would be lifted such that the main panel 12 would be horizontal. While this might be desired to permit selective use of a draining cutting board or not, the present invention provides a different solution to this desire.

In particular, it is noted that the front wall 26 is the only wall extending generally in its direction. As such, the cutting board 10 may be positioned such that the front wall 26 extends beyond the support surface (such as a counter top) for the cutting board. This will permit the cutting board 10 to be supported fully on the first cutting face 14, and thus cause the main panel 12 to be horizontal rather than angled. The described arrangement therefore permits angled placement of both cutting faces (one of which collects food juices), and selective horizontal placement of the second cutting face. As may be seen this arrangement provides great variety in use with simple structure.

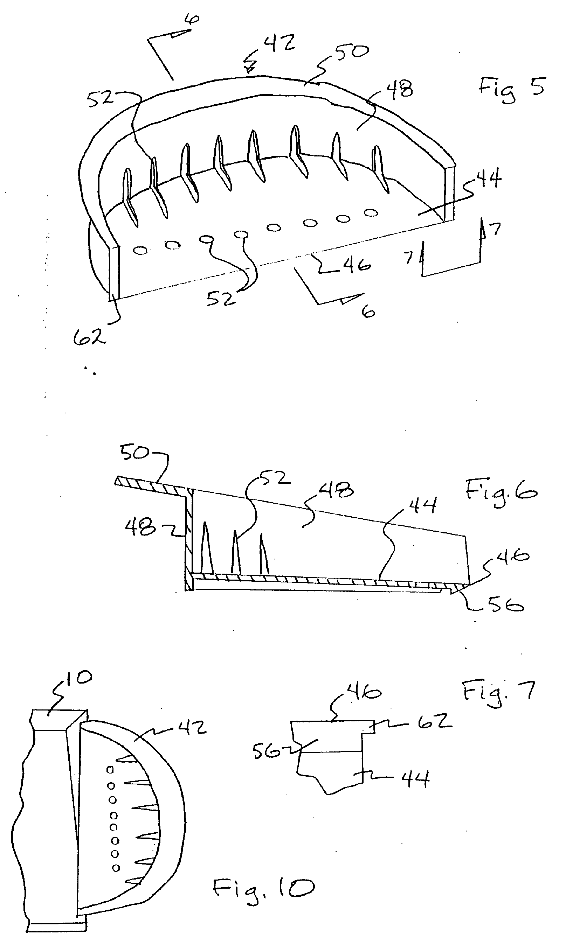

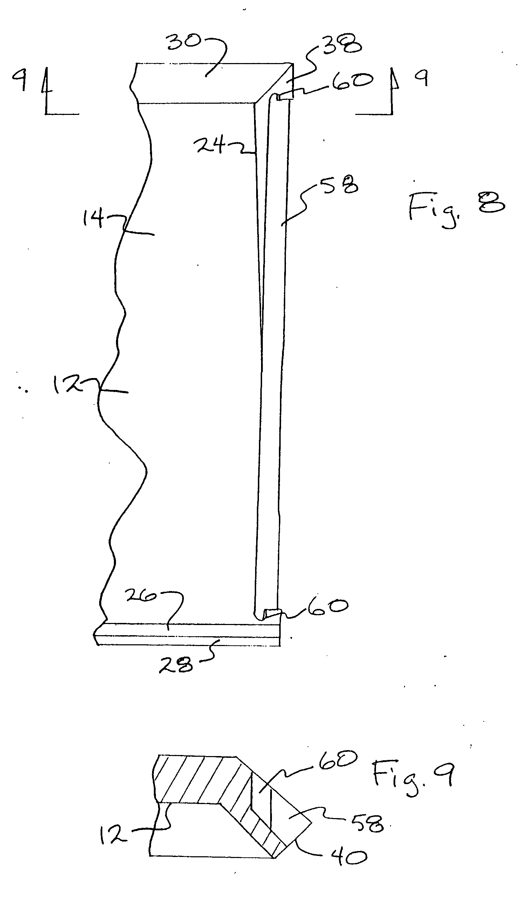

To expand the use and utility of the cutting board 10, it may be combined with a colander 42 (Fig. 5). The colander 42 includes a generally planar base wall 44 having a periphery which includes a linear edge 46. The remainder of the periphery of the base wall 44 (i.e., except linear edge 46) includes one or more back walls 48. In the embodiment shown, the remaining periphery is a section of a circle, and a single curved back wall 48 is provided. Other peripheral forms may of course be employed. A handle portion 50 may extend from the back wall 48 to allow improved manual grasping of colander 42.

As indicated by its name, colander 42 includes a plurality of apertures 52 extending through the base wall 44 and/or the back walls 48. In the embodiment shown, the base wall 44 includes first circular apertures and second slit apertures. Other shapes or arrangements of apertures 52 are of course possible. As may be envisioned, manually tilting the linear edge 46 upward at a shallow angle will cause food in the colander to remain relatively securely therein, while the apertures 52 permit juices or rinse water to drain from the food and the colander. To improve this draining, it is preferred that one or more support legs 54 extend downward from the base wall 44. In the embodiment shown, one support leg 54, coextensive with the back walls 48, is provided. As may be envisioned, this support leg will space the base wall 44 from the supporting surface (such as a counter top) to thus avoid any impediment to flow of fluid through the apertures 52.

The provision of the linear edge allows colander 42 to be used in a manner similar to a scoop, to thus easily force food into the colander 42. To improve this function, the lower face of the linear edge 46 may be tapered toward the linear edge, as shown at 56 in Fig. 6. This scooping function may of course include scooping food from the cutting board 10. While this scooping use may be the sole method of causing food to enter the colander, it is also possible to provide a mounting arrangement to secure the colander 42 to the cutting board 10.

In particular, and as best shown in Fig. 7, the outer face of second lateral wall 38 may include a mounting groove 58 formed therein. As best illustrated in Fig. 8, the mounting groove opens upon the second lateral wall rim 40, and preferably includes at each longitudinal end in a notch 60. This notch 60 will receive a mating lateral projection 62 extending from the longitudinal ends of the linear edge 46. This will serve to secure the colander 42 to the cutting board 10 in an mounted position, as shown in Fig. 10. Further, the notches 60 and lateral projections may be shaped to provide a snap fit if desired. As may be envisioned, in this mounted position, the user may force food into the colander (such as by using the cutting knife) without fear of the colander separating from the cutting board 10. Various other arrangements to releasably secure the colander 42 to the cutting board 10 could of course be employed. Further, a similar securing arrangement (such as groove 56) could be provided for the opposite first lateral wall 34, allowing use by right or left-handed users.

It is noted that forming the second lateral wall with the desired taper poses a difficulty in forming a groove therein, as by definition the lateral wall grows progressively smaller. This may be solved by forming the mounting groove 58 only in that portion of the lateral wall which is sufficiently large for its formation. In the preferred embodiment, however, this is solved by forming the mounting groove 58 in the thickness of the second lateral edge 24, and by providing the mounting groove with an increasing depth toward the increasing height of the lateral wall.

The cutting board of the present invention is believed to provide increased utility to the user, permitting both selective angled or horizontal cutting, and selective retention of the food juices in a reservoir. Further, when used in combination with the colander 42, the user has the ability to easily and quickly wash, drain and transfer the cut food from the cutting board 10 to serving or preparation.

From the foregoing it will be seen that this invention is one well adapted to attain all ends and objects hereinabove set forth together with the other advantages which are obvious and which are inherent to the structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth or shown in the accompanying drawings is to be interpreted as illustrative, and not in a limiting sense.

## Claims

1. A reversible cutting board, having a main panel with first and second cutting faces, said main panel further including front and rear edges, and first and second lateral edges, wherein the improvement comprises a front wall extending from said front edge to a front wall rim in a first direction, and a rear wall extending from said rear edge to a rear wall rim in a second direction, substantially opposite of said first direction.

2. A cutting board as in claim 1, further including a first lateral wall extending from said first lateral edge to a first lateral wall rim in said second direction, and a second lateral wall extending from said second lateral edge to a second lateral edge rim in said second direction.

3. A cutting board as in claim 2, in combination with a colander having a base wall with a periphery including a linear edge and a remainder from which a back wall extends, said linear edge being releasably secured to at least one of said first and second lateral walls.

4. A cutting board as in claim 2, further including a mounting groove extending into at least one of said first and second lateral walls, said mounting groove including a notch at each longitudinal end thereof.

5. A cutting board as in claim 3, in combination with a colander having a base wall with a periphery including a linear edge and a remainder from which a back wall extends, and further including a pair of spaced lateral projections extending from said back wall, said linear edge being releasably secured to said mounting groove with each said lateral projections being received within an associated one of said notches.

6. A cutting board as in claim 2, wherein said first and second lateral walls taper toward said front edge.
